# EUROPÄISCHE PATENTSCHRIFT

(11) **EP 2 399 771 B1**
(45) Veröffentlichungstag und Bekanntmachung des Hinweises auf die Patenterteilung: **07.08.2019**
(21) Anmeldenummer: 11164548.7
(22) Anmeldetag: 03.05.2011
(51) Int. Cl.: B60L 50/50, G07F 15/00, B60L 1/08

(54) **Verfahren zum ortsunabhängigen Bezug elektrischer Energie einer mobilen Verbrauchseinheit an einer ortsfesten Stromtankstelle**
Method for location-independent use of electrical energy of a mobile consumption unit at a fixed electricity charging station
Procédé de rapport indépendant du lieu d'énergie électrique d'une unité de consommation mobile sur une station service électrique fixe

(30) Priorität: 03.05.2010 DE 102010016751
(43) Veröffentlichungstag der Anmeldung: 28.12.2011
(73) Patentinhaber: EnBW Energie Baden-Württemberg AG, 76131 Karlsruhe (DE)
(72) Erfinder: Walch, Lars, 76307 Karlsbad (DE); Stiller, Hartmut, 42349 Wuppertal (DE)
(74) Vertreter: Dr. Meyer-Dulheuer & Partners LLP

(56) Entgegenhaltungen:
- WO-A2-2009/105448
- DE-U1-202008 014 766
- GB-A- 2 273 614

## Beschreibung

Die Erfindung betrifft Verfahren zum ortsunabhängigen Bezug elektrischer Energie einer mobilen Verbrauchseinheit an einer ortsfesten Stromtankstelle, wobei die mobile Verbrauchseinheit mit mindestens einer Kühl- und/oder Heizeinrichtung ausgestattet ist und die Kühl- und/oder Heizeinrichtung ohne Zwischenschaltung eines Akkumulators direkt mit elektrischer Energie aus der Stromtankstelle betrieben wird.

Zur Abdeckung des wachsenden Energiebedarfs von elektrisch angetriebenen Fahrzeugen werden u.a. öffentlich zugängliche kostenpflichtige oder kostenlose Stromtankstellen genutzt. Derartige Stromtankstellen stellen dabei die für das Aufladen eines Akkumulators eines Elektrofahrzeugs notwendige elektrische Energie bereit. So beschreibt die US-A 4,052,655 A1 eine Stromladeanlage mit mehreren jeweils autark arbeitenden Zapfsäulen, die jeweils mit mindestens einer Steckdose zum Anstecken eines Ladekabels und einer diesem zugeordneten mechanischen Sicherung versehen sind und denen jeweils eine Energiemengenzähleinrichtung und den Strompreis ermittelnde Recheneinrichtung zugeordnet sind. Die Bezahlung erfolgt dabei durch Münzeinwurf, was eine aufwändige Diebstahlsicherung erforderlich macht und einen hohen Wartungs- und Überwachungsaufwand bedingt.

Das Aufladen von Automobilen an jeweils autark arbeitenden, an das Stromnetz angeschlossenen Parkuhren während der Parkzeit ist aus der DE 41 01 053 A1 bekannt, bei der die abgenommene Strommenge durch Geldmünzen oder mit einer Scheckkarte gezahlt wird. Auch die DE 295 05 733 U1 beschreibt ein Ladesystem für Elektroautos mit einem Scheckkarten- oder Münzautomaten. Dabei stellt sich das Problem, dass diverse Manipulationsmöglichkeiten bestehen.

Auch die DE 42 13 414 C2 beschreibt eine Stromladeanlage mit mehreren Stromzapfsäulen, die jeweils mit wenigstens einer Steckdose zum Anstecken eines Ladekabels und mit einer diesem zugeordneten mechanischen Sicherung versehen sind und denen jeweils eine Energiemengenzähleinrichtung und eine den Strompreis ermittelnde Recheneinrichtung zugeordnet sind, wobei ein zentraler Terminal vorgesehen ist, der die mit den Energiemengenzähleinrichtungen aller Stromzapfsäulen signalleitungsverknüpfte Recheneinrichtung enthält und mit den betriebsnotwendigen Komponenten aller Stromzapfsäulen signalleitungsverknüpft ist. Weiterhin ist zwischen dem Terminal und jeder Stromzapfsäule jeweils eine dieser zugeordneten Interfaceeinrichtungen eingeschaltet, die eine den Betriebszustand einer mechanischen Sicherung kontrollierende Sicherungseinrichtung, eine bei Funktionsstörungen ansprechende Sicherungseinrichtung und eine Fehlerströme überwachende Sicherungseinrichtung enthält. Bei dieser Stromtankstelle enthält die Kontrolleinrichtung insbesondere eine Magnetkarten-Leseeinrichtung für Identifikationskarten. Auch eine derartige Vorrichtung muss sehr komplex aufgebaut sein und kann eine missbräuchliche Benutzung nicht verhindern.

Mit steigender Anzahl von Elektrofahrzeugen in den Innenstädten ergibt sich die Problematik, dass eine große Anzahl unterschiedlicher Benutzer eine Stromtankstelle beanspruchen. Es sollte jedoch möglichst eine benutzergerechte Abrechnung erfolgen, da im Gegensatz zu betriebsinternen Stromparkplätzen die Abrechnung nicht von einem einzigen Betreiber beglichen werden muss. So ist insbesondere die Möglichkeit nicht auszuschließen, dass einzelne Energieverbraucher bemüht sind, die gelieferte Energiemenge nicht selbst zu bezahlen. Vor diesem Hintergrund beschreibt die DE 44 14 008 C2 eine Anordnung zur Abgabe von elektrischer Energie an Kraftfahrzeuge mit einem Anschluss an eine elektrische Energieversorgung, einer Kommunikationseinheit, welche eine Eingabevorrichtung zur Bestätigung durch den Benutzer aufweist sowie einer Ausgabevorrichtung für Informationen an den Benutzer, einer Freigabeschaltung, die in Abhängigkeit von der Eingabe des Benutzers die Energieabgabe freischaltet, wobei erst nach einem Abgleich von Informationen aus der Eingabevorrichtung mit Informationen, die als Identifizierungsdaten vom Kraftfahrzeug zu der Freigabeschaltung übertragen werden, eine Freigabe der Energieabgabe erfolgt. Dabei wird insbesondere ein Kartenlesegerät benutzt, wobei eine diesem zugeordnete Karte Angaben über den Benutzer und über das Kraftfahrzeug enthält. Auch eine solche Vorrichtung ist mindestens mit einem Kartenlesegerät ausgestattet, sodass ein Missbrauch beim Strombezug nicht ausgeschlossen werden kann. Insbesondere ermöglicht diese bekannte Vorrichtung auch keine wirkliche benutzerspezifische Abrechnung bei unterschiedlichen Stromlieferanten.

Die internationale Patentanmeldung WO 2008/073453 A1 beschreibt ein System und ein Verfahren zur Energie-Verwaltung, bei welchem mobile Energie-quellen elektrische Energie in lokale Hausnetze, lokale Stromverteilungsnetze oder in ein größeres öffentliches Stromnetz einspeisen oder daraus Energie beziehen können. Über ein Netzwerk (Internet) kommuniziert das Energieversorgungsnetz, an welches unterschiedliche elektrische Verbraucher, wie beispielsweise Elektro-Fahrzeuge, angeschlossen sein können mit verschiedenen Energie-Quellen. Somit kann der Energie-Bedarf über unterschiedliche Energie-Quellen gedeckt werden, wobei auch Elektro-Fahrzeuge unabhängig von der Stelle, an der diese ans Stromnetz angeschlossen sind, mit eingebunden werden können. Die Aufgabe, welche durch diese Erfindung gelöst werden sollte, ist die Einbindung mehrerer mobiler elektrischer Verbraucher in ein großes Stromnetz, um zusätzliche Stromressourcen zur Verfügung zu stellen und zu nutzen. Es ist hierbei wichtig, eine riesige Anzahl an Fahrzeugbatterien zu koordinieren. Die Steuerung des Energieflusses übernehmen bei diesem System fahrzeugeigene intelligente "*power flow modules* (IPF)" und ein zentrales "*flow control center"*, welches ebenfalls an das Netzwerk angebunden ist und unterschiedliche Daten verarbeitet, wie beispielsweise Informationen der elektrischen Verbraucher, Wetterinformationen oder Daten von Stromlieferanten oder Energie-Marktplätzen.

DE20 2008 014 766 offenbart einen mobilen Stromzähler zum ortsunabhängigen Strombezug.

GB2273614 offenbart ein Verfahren um ein Fahrzeug mit Energie zu versorgen, wobei die Energie entweder zum Laden der Batterie oder für die Klimaanlage verwendet wird.

Ein Nachteil von derzeit eingesetzten Akkumulatoren ist jedoch, dass diese sehr schwach sind, so dass ein Heizen oder Kühlen der mobilen Verbrauchseinheit durch diese Akkumulatoren nur sehr bedingt möglich ist. Es wäre beispielsweise unwirtschaftlich, eine Standheizung bereits eine gewisse Zeit vor Fahrtantritt anzuschalten, da diese einen Großteil der Akkumulator-Leistung verbrauchen würde, um die mobile Verbrauchseinheit aufzuheizen.

Der vorliegenden Erfindung liegt deshalb die Aufgabe zu Grunde, ein Verfahren zum ortsunabhängigen Bezug elektrischer Energie einer mobilen Verbrauchseinheit an einer ortsfesten Stromtankstelle bereitzustellen, wobei die mobile Verbrauchseinheit mit mindestens einer Kühl- und/oder Heizeinrichtung ausgestattet ist, welches einen überwachungslosen Betrieb, eine hohe Betriebs- und Funktionssicherheit sowie einen hohen Bedienungskomfort aufweist und insbesondere die missbräuchliche Benutzung verhindert. Eine weitere Aufgabe der vorliegenden Erfindung ist es, die Stromtankstelle so zu steuern, dass keine Akkumulator-Leistung benötig wird, um die Kühl- und/oder Heizeinrichtung mit Strom zu versorgen.

Diese der Erfindung zugrunde liegende Aufgabe wird durch ein Verfahren zum ortsunabhängigen Bezug elektrischer Energie einer mobilen Verbrauchseinheit an einer ortsfesten Stromtankstelle, wobei die mobile Verbrauchseinheit mit mindestens einer Kühl- und/oder Heizeinrichtung ausgestattet ist, der Verbrauchseinheit eine eindeutige Kennnummer zugeordnet ist und die Stromtankstelle einen Stromzähler mit einer Zählernummer trägt und durch eine Steuervorrichtung für eine Stromtankstelle, welche für den ortsunabhängigen Strombezug und/oder Stromeinspeisung geeignet ist, gelöst.

Bei dem erfindungsgemäßen Verfahren werden mindestens folgende Verfahrensschritte ausgeführt:
- Herstellen einer ersten Kommunikationsverbindung zwischen der mobilen Verbrauchseinheit und der Stromtankstelle;
- Übermittlung eines Datenpaketes, enthaltend mindestens die Kennnummer und die Zählernummer, über eine zweite Kommunikationsverbindung an einen Abrechnungsserver;
- Zuordnung der Verbrauchseinheit mit Hilfe der Kennnummer zu einem Stromlieferanten und Zuordnung des Stromzählers mit Hilfe der Zählernummer zu einem Verteilnetzbetreiber mit Hilfe der auf dem Abrechnungsserver dazu hinterlegten Daten;

- Freischalten der Stromtankstelle, gegebenenfalls erst nach erfolgreicher Zuordnung am Abrechnungsserver;
- Abgabe von elektrischer Energie von der Stromtankstelle an die Kühl- und/oder Heizeinrichtung der Verbrauchseinheit über ein Ladekabel oder über eine berührungsfreie, insbesondere induktive oder kapazitive, Übertragung elektrischer Energie, wobei die Kühl- und/oder Heizeinrichtung ohne Zwischenschaltung eines Akkumulators mit elektrischer Energie der Stromtankstelle betrieben wird; und
- Übermittlung der von der Verbrauchseinheit an der Stromtankstelle entnommenen Menge an elektrischer Energie über die Kommunikationsverbindung an den Abrechnungsserver,
- wobei eine separate Rechnereinheit über eine Kommunikationsverbindung mit der Stromtankstelle verbunden ist, wobei die Kommunikationsverbindung als Funkverbindung ausgebildet sein kann; und
- wobei die technischen Regelgrößen der Kühl- und/oder Heizeinrichtung, insbesondere die Solltemperatur und ggfs. der gewünschte Zeitpunkt und dergleichen, in einem geeigneten Speicher der Verbrauchseinheit abgelegt werden oder vorzugsweise über die Kommunikationsverbindungen K1 und K3 übertragen werden.

Die Begriff Zählernummer wird in dieser Anmeldung synonym zum Zählpunkt verwendet, dem Punkt in einem Stromnetz, an dem Strom entnommen oder eingespeist wird und dieses durch eine technische Messung erfasst wird.

Das erfindungsgemäße Verfahren ermöglicht es einem Nutzer der mobilen Verbrauchseinheit an einer beliebigen Stromtankstelle mit hohem Bedienungskomfort elektrische Energie zu beziehen, wobei eine wunschgemäße Abrechnung direkt über einen ausgewählten Stromlieferanten erfolgen kann. Ein derartiger Strombezug bietet damit ähnlich gestaltete Nutzungsmöglichkeiten, wie sie bisher lediglich von festen Heimanschlüssen bekannt waren. Zusätzlich bietet dieses Verfahren den Vorteil, dass die Kühl- und/oder Heizeinrichtung in der mobilen Verbrauchseinheit über die Stromtankstelle direkt mit Strom versorgt wird, so dass eine Kühlung oder Aufheizung der mobilen Verbrauchseinheit bereits vor Fahrtantritt möglich ist, ohne Strom aus dem Akkumulator in der mobilen Verbrauchseinheit beziehen zu müssen.

In einer vorteilhaften Ausgestaltung bestehen zwischen Stationsbetreiber und einer Vielzahl von Kundenlieferanten Roaming-Abkommen, welches eine breite Abdeckung von unterschiedlichen Kundenlieferanten ermöglicht, dessen Kunden eine solche Stromtankstelle benutzen können. Ein Vorteil dieser Ausgestaltungsform des erfindungsgemäßen Verfahrens ist, dass die Durchführung des Verfahrens im bestehenden regulatorischen Umfeld möglich ist. Somit muss keine Umstellung der Stromnetze erfolgen.

In einer alternativen Ausgestaltung betreibt der Stationslieferant zugleich die Stromtankstellen, und/oder es erfolgt eine direkte Kommunikation zwischen dem Stationslieferanten und den Kundenlieferanten, wobei zwischen Stationslieferant und Kundenlieferanten eine Vielzahl von Roaming-Abkommen bestehen. In einer solchen Konstellation kann eine Freischaltung der Stromtankstelle durch den Stationslieferant erfolgen. Der Abrechnungsserver ist aus diesem Grunde einem Stationslieferant zugeordnet.

In einer weiteren vorteilhaften Ausgestaltungsform der Erfindung wird der Transfer der Roaming-Daten von Clearing-Häusern realisiert, welche vorzugsweise zusätzlich für die Überprüfung der Datenkonsistenz, Überprüfung und Koordination der Tarife, Zuordnung der Speicher- und Verbrauchseinheit zu einem Kundenlieferanten, Freischaltung der Stromtankstelle und Rechnungsabwicklung verantwortlich sind.

Gemäß einer zweckgemäßen Weiterbildung trägt auch die mobile Verbrauchseinheit einen Stromzähler zur Erfassung der von der Stromtankstelle entgegengenommenen Menge an elektrischer Energie. Dieser Stromzähler kann dem Nutzer der Verbrauchseinheit dazu dienen, die von der Stromtankstelle empfangene oder die eingespeiste Energiemenge nachzuvollziehen. Die Stromzähler im Sinne dieser Erfindung können beliebig gestaltet sein, wobei, insbesondere für den Stromzähler der Stromtankstelle, sichergestellt sein muss, dass die vom Stromzähler ermittelten Werte auch automatisch an den Abrechnungsserver übermittelbar, insbesondere digitalisiert, sind. Weiterhin müssen die Stromzähler sowohl in der Stromtankstelle als auch in der mobilen Verbrauchseinheit geeicht sein.

Die mobile Verbrauchseinheit kann im Sinne der vorliegenden Erfindung vorzugsweise ein Fahrzeug mit mindestens einem elektrischen Antrieb und einer Fahrgastzelle sein. Unter einem derartigen Elektrofahrzeug wird ein Fahrzeug mit mindestens einem elektrischen Antrieb verstanden. Dies beinhaltet auch die Klasse der Fahrzeuge, die nur ergänzend mit einem elektrischen Antrieb ausgestattet sind, wie beispielsweise Hybridfahrzeuge. Wesentliches Merkmal eines Elektrofahrzeuges in diesem Sinne ist die Notwendigkeit eines elektrischen Energiespeichers, also einer Batterie bzw. eines Akkumulators. Durch Anbindung an ein elektrisches Versorgungsnetz kann dieser Akkumulator regelmäßig aufgeladen werden. Die Verbrauchseinheit im Sinne der vorliegenden Erfindung kann weiterhin auch eine Vorrichtung zur Bereitstellung von elektrischer Energie sein. Dabei können insbesondere auch die oben genannten Elektrofahrzeuge, also deren Akkumulatoren, zum Einspeisen von elektrischer Energie genutzt werden. Es kann weiterhin zweckmäßig sein, das Elektrofahrzeug dazu zusätzlich mit einer Vorrichtung zur Gewinnung von elektrischer Energie zu kombinieren, also beispielsweise mit einer auf dem Dach des Elektrofahrzeugs montierten Photovoltaikanlage.

Als Stromtankstelle wird im Sinne dieser Erfindung eine Ladestation für eine mobile Verbrauchseinheit verstanden. Eine solche Stromtankstelle kann sich dazu im privaten Besitz in dessen Hausnetz befinden oder im Besitz eines Dritten an einem, ggf. öffentlich, für den Fahrzeugeigentümer zugänglichen Ort befinden.

In einer weiteren vorteilhaften Ausgestaltung erfolgt die Abgabe von elektrischer Energie von der Stromtankstelle an die Kühl- und/oder Heizeinrichtung oder das Herstellen einer ersten Kommunikationsverbindung erst nach erfolgter Ansteuerung durch die Verbrauchseinheit oder nach Freigabe durch die Stromtankstelle nach Erhalt eines Befehls von einer peripheren Rechnereinheit, vorzugsweise von dem Abrechnungsserver oder der separaten Rechnereinheit. Somit ist es einem Nutzer möglich, bereits im Vorfeld festzulegen, zu welchem Zeitpunkt die Kühl- und/oder Heizeinrichtung mit Strom versorgt werden soll um die mobile Verbrauchseinheit bereits vor Fahrtbeginn abzukühlen oder vorzuheizen.

In einer alternativen Ausgestaltungsform des erfindungsgemäßen Verfahrens wird die Steuerung oder Regelung der Kühl- und/oder Heizeinrichtung über die Kommunikationsverbindung K1 mit Hilfe der Stromtankstelle ausgeführt. Dies erhöht erheblich den Bedienkomfort einer solchen Vorrichtung. Vorzugsweise ist der Kühl- und Heizeinrichtung jeweils eine eigene Kennnummer (IDx) zugeordnet, so dass eine eindeutige Identifizierung der jeweiligen Kühl- und Heizeinrichtung möglich ist. Bei der Kühlvorrichtung handelt es sich vorzugsweise um eine Klimaanlage und bei der Heizeinrichtung handelt es sich vorzugsweise um eine elektrische Standheizung.

In einer weiteren alternativen Ausgestaltung wird unabhängig von der Außentemperatur die Ansteuerung der Kühleinrichtung oder der Heizeinrichtung so geregelt, dass eine gewünschte Solltemperatur, insbesondere einer Fahrgastzelle der Verbrauchseinheit, erreicht wird. Somit ist es einem Nutzer ebenfalls möglich, eine gewünschte Temperatur, die bei Fahrtbeginn vorliegen soll im Vorfeld einzustellen, so dass bei Fahrtantritt die Fahrgastzelle entsprechend aufgewärmt oder abgekühlt ist. Besonders vorteilhaft ist es, wenn mindestens eine Regelgröße der Kühl- und/oder der Heizeinrichtung von einem Benutzer über das Internet, ein PDA, ein Mobiltelefon, oder ein Smartphone in eine Eingabemaske, welche vorzugsweise auf der separaten Rechnereinheit hinterlegt ist, eingegeben wird und die genannte(n) Regelgröße(n) dann an die Stromtankstelle weitergeleitet wird. Dies erlaubt es einem Nutzer, auch von unterwegs die Stromtankstelle und damit die Kühl- und/oder der Heizeinrichtung gezielt anzusteuern. In einer alternativen Ausgestaltung kann eine direkte Kommunikation zwischen PDA, Mobiltelefon oder Smartphone mit dem mobilen Fahrzeug aufgenommen werden. Vorzugsweise kann ebenfalls die Ist-Temperatur der Fahrgastzelle abgefragt werden, wobei dazu insbesondere die Kommunikationsleitungen K1 und K3 genutzt werden. Dies erlaubt eine Kontrolle der in der Fahrgastzelle vorherrschenden Temperatur und eine präzise Regulierung der Temperatur in der mobilen Verbrauchseinheit.

Gemäß einer bevorzugten Weiterentwicklung des Verfahrens erfolgt bei der räumlichen Annäherung der mobilen Verbrauchseinheit an eine ortsfeste Stromtankstelle ein automatischer Verbindungsaufbau der ersten Kommunikationsverbindung zwischen der mobilen Verbrauchseinheit und der Stromtankstelle. Diese Ausgestaltung erlaubt dem Nutzer der mobilen Verbrauchseinheit, den Strombezug oder die Stromeinspeisung ohne Zeitverzögerung beginnen zu können.

Bei einer weiteren vorteilhaften Weiterentwicklung des Verfahrens erfolgt die erste Kommunikationsverbindung kabelgebunden, insbesondere über das Ladekabel unter Nutzung von Powerline Communication oder Digitalstrom (Informationsübertragung im Basisband in der Nähe des Nulldurchganges des Wechselstromes) oder über ein separates Datenkabel, oder über Funk, insbesondere über WLAN, ZIGBee, Bluetooth, Transpondertechnologie oder RFID. Dabei kann die zweite Kommunikationsverbindung zwischen der Stromtankstelle und dem Abrechnungsserver kabelgebunden, vorzugsweise über DSL, ISDN, Festnetztelefon oder Powerline Communication, Digitalstrom oder über Funk erfolgen. Alternativ oder auch zusätzlich kann die zweite Kommunikationsverbindung auch direkt zwischen der Speicher- und Verbrauchseinheit und dem Abrechnungsserver über Funk erfolgen. Vorzugsweise wird die zweite Kommunikationsverbindung nach einer der beiden genannten Möglichkeiten über Funk als GSM, GPRS, UMTS, WiMAX, Funkrundsteuerung oder Paging ausgestaltet. Die letztgenannten Funkübertragungssysteme haben den Vorteil, dass auch gegebenenfalls größere Reichweiten möglich sind.

Die dritte Kommunikationsverbindung zwischen der Stromtankstelle und dem zusätzlichen Abrechnungsserver kann ebenfalls kabelgebunden, vorzugsweise über DSL, ISDN, Festnetztelefon oder Powerline Communication, Digitalstrom oder über Funk erfolgen. Vorzugsweise ist die dritte Kommunikationsverbindung aufgrund der größeren Reichweiten über Funk als GSM, GPRS, UMTS, WiMAX, Funkrundsteuerung oder Paging ausgestaltet.

Gemäß einer zweckdienlichen Weiterentwicklung werden mithilfe eines an der Speicher- und Verbrauchseinheit angebrachten Ortungssystems Daten über den Aufenthaltsort der Speicher- und Verbrauchseinheit über Funk an eine Stromtankstelle oder direkt zum Abrechnungsserver übertragen.

Bei einer vorteilhaften Weiterentwicklung des Verfahrens sind auf dem Abrechnungsserver außerdem Daten zu mindestens einem Übertragungsnetzbetreiber hinterlegt. Es kann weiter zweckdienlich sein, auch Daten zu mindestens einem Stromverteilnetzbetreiber und/oder Daten zu mindestens einem Stromlieferanten zu hinterlegen.

Die Abrechnung des Strombezugs an der Stromtankstelle bzw. der entsprechenden Stromeinspeisung kann vorzugsweise auf dem Abrechnungsserver mithilfe einer Software erfolgen. Ein solches Computerprogramm kann dazu einen oder mehrere der oben genannten Verfahrensschritte ausführen.

Ebenfalls Bestandteil der Erfindung ist eine Steuervorrichtung in einer Stromtankstelle zur Durchführung des erfindungsgemäßen Verfahrens, wobei die Steuervorrichtung mindestens zwei räumlich voneinander getrennte Bereiche, einen Anschlussbereich und einen Steuerbereich, aufweist. Der Anschlussbereich weist mindestens einen Aktor zur Betätigung eines Schalters auf, um den Ladevorgang und/oder den Einspeisevorgang zu starten und zu stoppen. Der Steuerbereich besitzt mindestens ein zentrales Steuergerät, ein Kommunikationsmodul zur Aufbereitung von Daten aus dem Steuergerät für die Kommunikation mit der mobilen Speicher- und Verbrauchseinheit und/oder mit einem Datenmanagementsystem, sowie zur Umwandlung von eintreffenden Signalen in für das Steuergerät verarbeitbare Daten, eine Messeinrichtung zur Messung der durchfließenden elektrischen Energie bei der Aufladung der mobilen Speicher- und Verbrauchseinheit oder beim Einspeisen in die Stromtankstelle, ein Verschlüsselungsmodul zur Verschlüsselung der vom Steuergerät erzeugten Daten und ein mit der Messeinrichtung verbundenes Mittel zur Signierung der von der Messeinrichtung ermittelten Daten mit einer Zählernummer.

Die Aufteilung der erfindungsgemäßen Steuervorrichtung für eine Stromtankstelle in zwei separate Bereiche hat den Vorteil, dass der Anschlussbereich, der den Anschluss für das Elektrofahrzeug aufweist, kompakt ausgebildet sein kann und somit platzsparend an unterschiedlichen Stellen angebracht werden kann. Der Steuerbereich, der ebenfalls die Messeinrichtung beinhaltet, kann in einer separaten Vorrichtung untergebracht werden.

In einer weiteren vorteilhaften Ausgestaltung der erfindungsgemäßen Steuervorrichtung ist der Anschlussbereich der Steuervorrichtung mit dem Aktor und dem Schalter in einer Straßenlaterne, oder einem elektrisch angesteuerten Werbeplakat oder einer Transformatorenstation untergebracht. In einer alternativen Ausgestaltungsform sind beide Bereiche der Steuervorrichtung über eine Kommunikationsverbindung, welche vorzugsweise kabellos angelegt ist, verbunden.

Der Anschlussbereich der erfindungsgemäßen Steuervorrichtung kann somit auch in eine Straßenlaterne integriert sein, welche sich meistens in der Nähe von Parkplätzen befindet. Dies hat den Vorteil, dass keine kompletten Stromtankstellen am Straßenrand aufgebaut werden brauchen, sondern der Anschlussbereich direkt in eine bestehende Straßenlaterne integriert werden kann, wobei dieser Bereich direkt durch die Straßenlaterne mit Strom versorgt werden kann. Der Steuerbereich kann dann an einer separaten Stelle angebracht werden. Dies erhöht erheblich den Bedienkomfort einer solchen Stromtankstelle, weil Anschlussbereiche für mobile Verbrauchseinheiten viel unproblematischer an vielen Stellen zur Verfügung gestellt werden können.

Gemäß einer vorteilhaften Weiterentwicklung der Vorrichtung kann die Messeinrichtung weiterhin den Energieverbrauch eines oder mehrerer Eigenverbraucher der Stromtankstelle messen.

Vorteilhafterweise ist die Vorrichtung so aufgebaut, dass eine Signatureinheit derart mit der Messeinrichtung verbunden ist, dass eine eichrechtliche Zulassung dieser Kombination und der damit erzeugten signierten Messwerte für Abrechnungszwecke erzielt werden kann.

Das zentrale Steuergerät enthält vorzugsweise mindestens einen Microprozessor, ein persistentes Speicherelement, eine Einrichtung zur Selbstüberwachung und eine Echtzeituhr.

Das zentrale Steuergerät ist die Schaltzentrale innerhalb der Steuervorrichtung. Das Steuergerät bezieht dazu über interne Schnittstellen insbesondere Informationen, die zur Identifikation sowie zur Verschlüsselung der über die Messeinrichtung ermittelten Daten erforderlich sind. Gleichzeitig steuert das Steuergerät den Aktor, der einen Schalter betätigt, um bei erfolgter Freigabe den Ladevorgang eines Akkumulators des Elektrofahrzeugs zu starten oder zu stoppen. Dieser Vorgang ist bidirektional, das heißt ebenso wird über den Aktor die Einspeisung aus dem Akkumulator in die Stromtankstelle gestartet und gestoppt.

Das Kommunikationsmodul weist vorzugsweise einen modularen Aufbau auf, der eine einfache Adaption an verschiedene Übertragungsmedien, Datenübertragungsprotokolle und Datenübertragungsstandards durch Parametrisierung oder einen Modulwechsel erlaubt.

Im Kommunikationsmodul werden also Daten aus dem Steuergerät für die Kommunikation mit dem Elektrofahrzeug und/oder für die Kommunikation mit einem Abrechnungsserver aufbereitet. Dazu werden die Daten in übertragungsfähige Signale auf der Basis geeigneter standardisierter oder proprietärer Protokolle umgewandelt. Die Kommunikation erfolgt bidirektional, das heißt das Kommunikationsmodul wandelt ebenso eintreffende Signale in für das Steuergerät verarbeitbare Daten um.

Die Messeinrichtung enthält vorzugsweise mindestens eine Signatureinrichtung oder ist derart mit einer Signatureinrichtung verbunden, dass eine eichrechtliche Zulassung dieser Kombination und der damit erzeugten signierten Messwerte für Abrechnungszwecke erzielt werden kann.

Die Messeinrichtung misst die Menge der durchfließenden elektrischen Energie, vorzugsweise in kWh, und übermittelt diese an das Steuergerät. Dieser Prozess ist bidirektional, das heißt es kann sowohl ein Ladeprozess als auch gegebenenfalls ein Einspeiseprozess an die Stromtankstelle gemessen und überwacht werden. Des Weiteren kann die Messeinrichtung den Eigenverbrauch der Stromtankstelle differenziert messen, um eine Doppelzählung bereits bezahlter Energie auszuschließen.

Das Verschlüsselungsmodul unterstützt vorzugsweise Verschlüsselungsverfahren, die den vom deutschen Bundesamt für Sicherheit in der Informationstechnik (BSI) definierten Standards entsprechen, und stellt mindestens einen kryptographisch gesicherten Speicherbereich bereit, in dem die Schlüssel gespeichert werden.

Mit Hilfe des Verschlüsselungsmoduls wird mindestens der über die Messeinrichtung ermittelte Verbrauchs- oder Einspeisewert verschlüsselt. Sie kann aber auch für die Verschlüsselung weiterer Fahrzeugzustandsdaten verwendet werden, um deren Übertragung sicherer zu gestalten. Das Mittel zur Signierung sollte mindestens die Verbrauchs- und/oder die Einspeisedaten mit einem eindeutigen Signaturstempel, vorzugsweise einer Kennnummer, zur Identifikation auf dem Abrechnungsserver versehen. Vorzugsweise unterstützt es ein Signaturverfahren, das eine eichrechtliche Zulassung zur Abrechnung der damit signierten Mess-, Verbrauchs- und Steuerinformationen ermöglicht.

Gemäß einer vorteilhaften Weiterentwicklung der Vorrichtung sind/ist mit dem zentralen Steuergerät über entsprechende Schnittstellen weiterhin ein Display und/oder ein Eingabegerät verbunden. Das Eingabegerät kann gegebenenfalls als Lesegerät ausgestaltet sein, welches die Kennnummer von einem portablen Datenspeichermedium des Nutzers der Speicher- und Verbrauchseinheit liest, beispielsweise von einer Kreditkarte, einem Transponderchip oder einem RFID. Über das Eingabegerät könnte gemäß einer Ausführungsvariante die Eingabe der Kennnummer oder einer sonstigen Benutzererkennung, beispielsweise eines PIN-Codes oder einer Kreditkartennummer, erfolgen.

Weitere Vorteile und Einzelheiten des erfindungsgemäßen Verfahrens und der Steuervorrichtung für eine Stromtankstelle ergeben sich aus den anhand der Zeichnungen beschriebenen und die Erfindung nicht einschränkenden Ausführungsbeispielen.

Dabei zeigen
- Fig.1.: eine abstrakte Darstellung des Verfahrens zum ortsunabhängigen Strombezug elektrischer Energie einer mobilen Verbrauchseinheit an einer ortsfesten Stromtankstelle, und
- Fig.2.: eine schematische Darstellung eines Ausführungsbeispiels der erfindungsgemäßen Steuervorrichtung für eine Stromtankstelle.

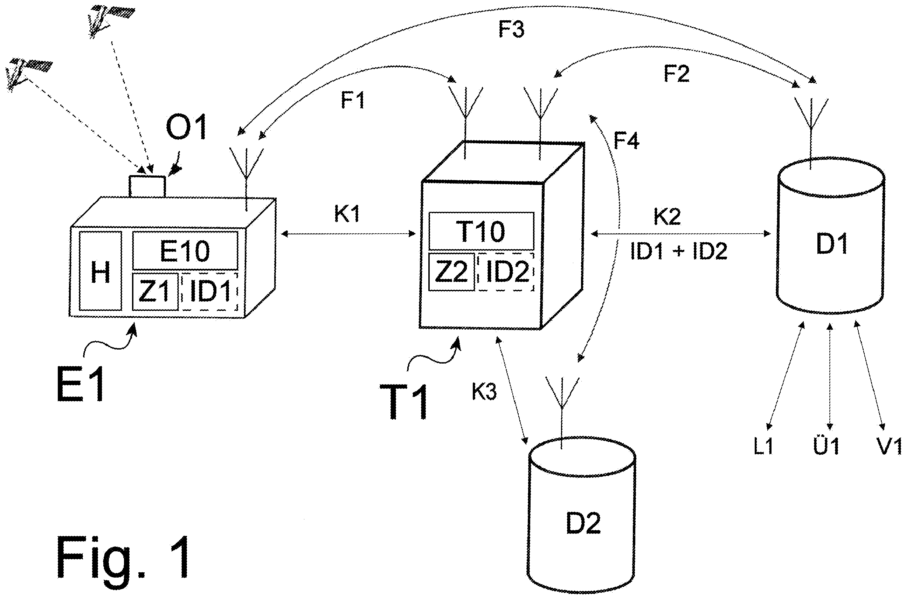

In Fig. 1 ist die Anordnung eines Elektrofahrzeuges an einer Stromtankstelle, welche in ein Abrechnungssystem integriert ist, gemäß einem Ausführungsbeispiel abstrakt dargestellt. Die mobile Verbrauchseinheit E1 ist hierbei ein Elektrofahrzeug mit einer Kühl- und/oder Heizeinrichtung H und einer Messeinrichtung Z1, der eine Kennnummer ID1 zugeordnet ist. Die Messeinrichtung Z1 ist Bestandteil eines mobilen Stromzählers E10, welcher in der deutschen Patentanmeldung 10 2008 044 527.4-55 detailliert beschrieben ist.

Die ortsfeste Stromtankstelle T1, ausgewählt aus einer Vielzahl von zeichnerisch nicht dargestellten Stromtankstellen T1 - Tn, ist gemäß Fig. 1 über Stromleitungen mit einem Verteilnetzbetreiber V1 verbunden und wird über diese Stromleitungen mit elektrischem Strom mindestens eines Stromlieferanten L1 versorgt. Eine für den Strombezug oder die Einspeisung besonders geeignete Stromtankstelle bzw. eine Steuervorrichtung T10 für eine solche Stromtankstelle ist Gegenstand der deutschen Patentanmeldung 10 2008 044 528.2-32.

Beim Annähern des Elektrofahrzeuges E1 an die Stromtankstelle T1 wird zwischen dem Elektrofahrzeug E1 und der Stromtankstelle T1 eine erste Kommunikationsverbindung K1 hergestellt. Diese erste Kommunikationsverbindung K1 ist bei dem dargestellten Ausführungsbeispiel gemäß Fig. 1 als Funkverbindung F1 ausgestaltet. Da diese Funkverbindung F1 lediglich für relativ kurze Distanzen ausgelegt sein muss, eignen sich hierfür insbesondere WLAN, ZIGBee, Bluetooth, Transpondertechnologie oder RFID. Nach Herstellung der ersten Kommunikationsverbindung K1 wird ein Datenpaket über eine zweite Kommunikationsverbindung K2 an ein Datenmanagementsystem (Abrechnungsserver) D1 übermittelt, wobei dieses Datenpaket mindestens die Kennnummer ID1 und die Zählernummer ID2 enthält. Dem Elektrofahrzeug E1 ist eine eindeutige Kennnummer ID1 zugeordnet und die Stromtankstelle T1 trägt einen Stromzähler Z2 mit einer Zählernummer ID2. Auf dem Abrechnungsserver D1 kann nun eine Zuordnung des Elektrofahrzeuges E1 mithilfe der Kennnummer ID1 zu einem Stromlieferanten L1 sowie eine Zuordnung der übermittelten Zählerstände des Stromzählers Z2 mithilfe der Zählernummer ID2 zu einem Verteilnetzbetreiber V1 mithilfe der auf dem Abrechnungsserver D1 dazu hinterlegten Daten erfolgen. Die Ausgestaltung der ersten Kommunikationsverbindung K1 als Funkverbindung F1 über RFID- oder Transpondertechnologie würde beispielsweise genügen, um die Kennnummer ID1 auszulesen.

Nach einer entsprechenden positiven Zuordnung kann die Stromtankstelle T1 mithilfe der zweiten Kommunikationsverbindung K2 freigeschaltet werden. Die zweite Kommunikationsverbindung K2 zwischen der Stromtankstelle T1 und dem Abrechnungsserver D1 kann kabelgebunden, insbesondere über DSL, ISDN, Festnetztelefon oder Powerline, oder über Funk F2 erfolgen. Gemäß eines alternativen Ausführungsbeispiels kann die Kommunikationsverbindung K2 direkt zwischen dem Elektrofahrzeug E1 und dem Abrechnungsserver D1 über Funk F3 erfolgen.

Die entsprechenden Funkverbindungen F2 und F3 müssen jeweils für größere Entfernungen ausgelegt sein, sodass insbesondere GSM, GPRS, UMTS, WiMAX, Funkrundsteuerung oder Paging in Frage kommen.

Nach der Freischaltung der Stromtankstelle T1, gegebenenfalls erst nach erfolgreicher Zuordnung am Abrechnungsserver D1, kann die Abgabe elektrischer Energie von der Stromtankstelle T1 an die Kühl- und/oder Heizeinrichtung H der Verbrauchseinheit E1 über ein Ladekabel oder über eine berührungsfreie induktive Stromübertragung erfolgen. Hierbei wird die Kühl- und/oder Heizeinrichtung H ohne Zwischenschaltung eines Akkumulators mit elektrischer Energie der Stromtankstelle versorgt. Somit kann der Akkumulator innerhalb der Verbrauchseinheit E1 geschont werden. Die Möglichkeit der berührungsfreien induktiven Stromübertragung zwischen der Kühl- und/oder Heizeinrichtung H und der Stromtankstelle T1 hat den besonderen Vorteil, dass bei der Energieübertragung keine physische Verbindung zwischen dem Elektrofahrzeug E1 und der Stromtankstelle T1 notwendig ist, wenn auch die erste Kommunikationsverbindung K1 als Funkverbindung F1 ausgestaltet ist. Daraus ergibt sich für den Nutzer des Elektrofahrzeuges E1 ein besonders hoher Bedienungskomfort.

Die Stromtankstelle T1 ist innerhalb dieses Verfahrens für die Steuerung oder Regelung der Kühl- und/oder Heizeinrichtung H mittels der Kommunikationsverbindung K1 verantwortlich. Unabhängig von der Außentemperatur kann die Ansteuerung der Kühl- oder Heizeinrichtung so geregelt sein, dass eine gewünschte Solltemperatur, insbesondere innerhalb der Fahrgastzelle, erreicht wird. Zusätzlich ist es möglich, die Ist-Temperatur innerhalb der Fahrgastzelle abzufragen, wozu insbesondere die Kommunikationsleitungen K1 und K3 genutzt werden.

Die separate Rechnereinheit D2 ist über eine weitere Kommunikationsverbindung K3 mit der Stromtankstelle T1 verbunden und kann dazu genutzt werden, basierend auf Regelgrößen einen Befehl zur Freigabe an die Stromtankstelle zu senden. In dem Ausführungsbeispiel ist diese Kommunikationsverbindung K3 als Funkverbindung F4 ausgebildet. Diese Funkverbindung F4 muss für größere Entfernungen ausgelegt sein, sodass insbesondere GSM, GPRS, UMTS, WiMAX, Funkrundsteuerung oder Paging in Frage kommen. Der Nutzer hat somit die Möglichkeit, über das Internet, ein PDA, ein Mobiltelefon, oder ein Smartphone in eine Eingabemaske, welche auf der Rechnereinheit D2 hinterlegt ist, mindestens eine Regelgröße der Kühl- und/oder der Heizeinrichtung H einzugeben. Bei den Regelgrößen handelt es sich bevorzugt um die Solltemperatur innerhalb der Fahrgastzelle und den gewünschten Zeitpunkt, zu welchem die Solltemperatur erreicht werden soll, oder zu welchem ein Kühl- oder Heizvorgang gestartet werden soll. Die eingegebenen Regelgrößen werden daraufhin an die Stromtankstelle T1 weitergeleitet und diese wird für die Stromabgabe freigeschaltet. Dieses Verfahren hat den Vorteil, dass der Nutzer immer in ein Fahrzeug, welches nach seinen Bedürfnissen vortemperiert ist, einsteigen kann, ohne dass die Kapazität des Akkumulators innerhalb der mobilen Verbrauchseinheit E1 reduziert wird. Die technischen Regelgrößen der Kühl- und/oder Heizeinrichtung H, insbesondere die Solltemperatur und der gewünschte Zeitpunkt für die Kühlung oder Aufheizung werden hierfür in einem geeigneten Speicher der mobilen Verbrauchseinheit E1 abgelegt, oder können vorzugsweise über eine Kommunikationsverbindung von einer peripheren Rechnereinheit D2 auf die Stromtankstelle T1 übertragen werden. Nach Beendigung der Energieübertragung kann der vom Elektrofahrzeug E1 an der Stromtrankstelle T1 entnommene Strombetrag über die Kommunikationsverbindung K2 an den Abrechnungsserver D1 oder über die Kommunikationsverbindung K3 an den zusätzlichen Abrechnungsserver D2 übermittelt werden.

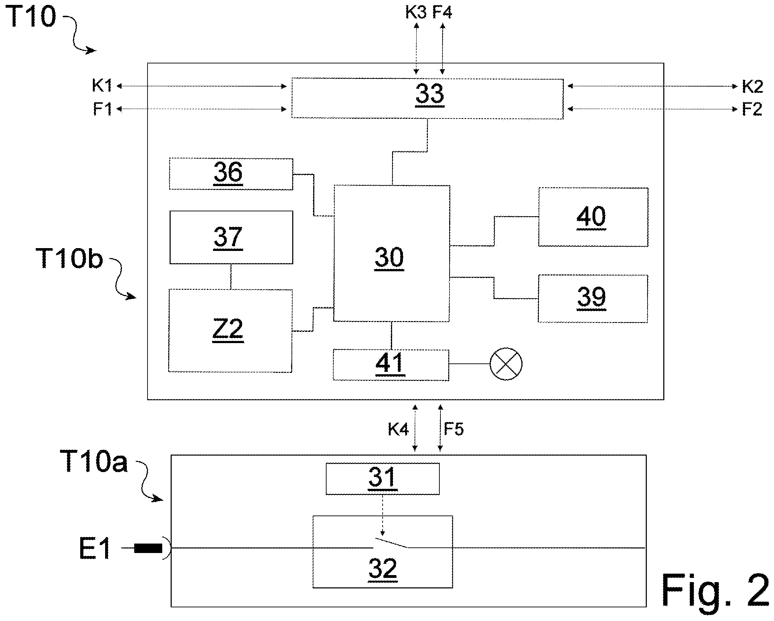

Gemäß der Fig. 2 enthält die Steuervorrichtung T10 für eine Stromtankstelle T1 folgende Komponenten: ein zentrales Steuergerät 30; einen Aktor 31 zur Betätigung eines Schalters 32, um den Ladevorgang und/oder den Einspeisevorgang zu starten und zu stoppen; ein Kommunikationsmodul 33 zur Aufbereitung von Daten aus dem Steuergerät 30 für die Kommunikation mit der mobilen Speicher- und Verbrauchseinheit E1 und/oder mit einem Abrechnungsserver D1 und/oder mit einem zusätzlichen Abrechnungsserver D2, sowie zur Umwandlung von eintreffenden Signalen in für das Steuergerät 30 verarbeitbare Daten; eine Messeinrichtung Z2 zur Messung der durchfließenden elektrischen Energie bei der Aufladung der mobilen Speicher- und Verbrauchseinheit E1 oder beim Einspeisen in die Stromtankstelle T10; ein Verschlüsselungsmodul 36 zur Verschlüsselung der vom Steuergerät 30 erzeugten Daten und ein mit der Messeinrichtung Z2 verbundenes Mittel 37 zur Signierung der von der Messeinrichtung Z2 ermittelten Daten mit einer Zählernummer ID2. Das Kommunikationsmodul 33, die Messeinrichtung Z2 und das Verschlüsselungsmodul 36 sind mit dem zentralen Steuergerät 30 über interne Schnittstellen verbunden. Die Messeinrichtung Z2 kann weiterhin den Energieverbrauch eines oder mehrerer Eigenverbraucher 41 der Stromtankstelle T10 messen.

Mit dem zentralen Steuergerät 30 sind/ist weiterhin ein Display 39 und/oder ein Eingabegerät 40 verbunden.

Die Steuervorrichtung T10 ist erfindungsgemäß in zwei Bereiche aufgeteilt, die räumlich voneinander getrennt sind, wobei ein Anschlussbereich T10a nur den Aktor 31 zur Betätigung eines Schalters 32, um den Ladevorgang und/oder den Einspeisevorgang zu starten oder zu stoppen beinhaltet. Der Steuerbereich T10b beinhaltet die restlichen Komponenten der Steuervorrichtung, die für die Steuerung und Verbrauchsmessung notwendig sind. Über die Kommunikationsverbindung K4, welche auch als Funkverbindung F5 ausgestattet sein kann, stehen beide Bereiche der Steuervorrichtung in Kontakt. Da diese Funkverbindung F5 lediglich für relativ kurze Distanzen ausgelegt sein muss, eignen sich hierfür insbesondere WLAN, ZIGBee, Bluetooth, Transpondertechnologie oder RFID.

Es ist erfindungsgemäß bevorzugt, wenn der Anschlussbereich T10a in eine Straßenlaterne integriert ist, so dass ein Nutzer einer mobilen Verbrauchseinheit E1 bequem von einem Parkplatz am Straßenrand sein Fahrzeug an die Stromtankstelle anschließen kann. Somit ist in der Straßenlaterne nur der Anschluss für die mobilen Verbrauchseinheit E1, sowie der Aktor 31 zur Betätigung des Schalters 32 integriert, um den Ladevorgang und/oder den Einspeisevorgang zu starten oder zu stoppen. Diese Komponenten können platzsparend in eine solche Straßenlaterne integriert und durch diese mit Strom versorgt werden. Dies erhöht erheblich den Bedienkomfort für einen Nutzer der Stromtankstelle. Der Steuerbereich T10b kann dann erfindungsgemäß in einer zusätzlichen Vorrichtung untergebracht sein, die beispielsweise an einer Hauswand angebracht ist. An dieser zusätzlichen Vorrichtung können außerdem das Display 39 und das Eingabegerät 40 angebracht sein, über welche der Nutzer die Stromtankstelle ansteuern kann. Die Kombination des erfindungsgemäßen Verfahrens mit der Steuervorrichtung für eine Stromtankstelle, die in zwei Bereiche aufgeteilt ist, ermöglicht es einem Nutzer, sein Fahrzeug auf einem beliebigen Parkplatz an eine Stromtankstelle anzuschließen und das Fahrzeug vor Fahrtantritt nach seinen Wünschen vorzutemperieren. Alternativ zu einer Straßenlaterne kann der Anschlussbereich T10a auch in ein elektrisch angesteuertes Werbeplakat oder in eine Transformatorenstation integriert werden, die eine Stromversorgung des Anschlussbereiches der Steuervorrichtung T10a ermöglichen.

Im Kommunikationsmodul 33 werden also Daten aus dem Steuergerät 30 für die Kommunikation über die erste Kommunikationsverbindung K1, gegebenenfalls als Funkverbindung F1 ausgestaltet, mit dem Elektrofahrzeug E1 und/oder für die Kommunikation über die zweite Kommunikationsverbindung K2, gegebenenfalls als Funkverbindung F2 ausgestaltet, mit einem Abrechnungsserver D1 und/oder für die Kommunikation über die dritte Kommunikationsverbindung K3, gegebenenfalls als Funkverbindung F4 ausgestattet, mit einem zusätzlichen Abrechnungsserver D2, aufbereitet.

Das zentrale Steuergerät 30 ist die Schaltzentrale innerhalb der Steuervorrichtung T10. Das Steuergerät 30 bezieht dazu über interne Schnittstellen insbesondere Informationen, die zur Identifikation sowie zur Verschlüsselung der über die Messeinrichtung Z2 ermittelten Daten erforderlich sind. Gleichzeitig steuert das Steuergerät 30 den Aktor 31, der einen Schalter 32 betätigt, um bei erfolgter Freigabe den Ladevorgang eines zeichnerisch nicht dargestellten Ackumulators des Elektrofahrzeugs E1 zu starten oder zu stoppen. Dieser Vorgang ist bidirektional, das heißt ebenso wird über den Aktor 31 die Einspeisung aus dem Akkumulator in die Stromtankstelle T1 gestartet und gestoppt. Die Freigabe kann dabei über die erste Kommunikationsverbindung K1, gegebenenfalls als Funkverbindung F1 ausgestaltet, und/oder über die zweite Kommunikationsverbindung K2, gegebenenfalls als Funkverbindung F2 ausgestaltet, und/oder über die dritte Kommunikationsverbindung K3, gegebenenfalls als Funkverbindung F4 ausgestattet, erfolgen.

Der Abrechnungsserver D1 empfängt also über die Kommunikationsverbindungen K2, F2 und/oder F3 Messdaten von den Stromzählern E10 und Z2, und/oder über die Kommunikationsmodul 33 von der Steuervorrichtung T10, welche direkt dem jeweiligen Elektrofahrzeug E1 bzw. der Stromtankstelle T1 zugeordnet werden können. Auf dem Abrechnungsserver ist dazu hinterlegt, welchem Stromlieferanten der mobile Stromzähler E10 mit der Kennnummer ID1 zugeordnet ist und welchem Verteilnetzbetreiber V1 der Stromzähler Z2 mit der Zählernummer ID2 zugeordnet ist. Wenn die Messdaten des mobilen Stromzählers E10 für die Abrechnung eingesetzt werden, müssen die ermittelten Zählerdaten den gleichen Anforderungen genügen wie der Stromzähler Z2 (Verschlüsselung, Signierung, Eichung). Das ermöglicht erstmals die kundenspezifische Abrechnung der aus dem Stromnetz entnommenen Menge elektrischer Energie bei einem sich örtlich dynamisch verhaltenen Energieverbrauch. Als Lieferant elektrischer Energie wird im Sinne dieser Erfindung ein Energieversorgungsunternehmen verstanden, welches eine Geschäftsbeziehung mit dem Besitzer eines Elektrofahrzeuges E1 zur Belieferung mit elektrischer Energie unterhält. Mithilfe der Stromtankstelle T1 und dem Abrechnungsserver D1 wird es für den Stromlieferanten L1 erstmals möglich, das Elektrofahrzeug E1 abzurechnen, unabhängig davon, welche Stromtankstelle T1 dieses aufsucht und unabhängig davon, ob die Verbrauchsdaten über die zweite Kommunikationsverbindung K2 bzw. F2 von der Stromtankstelle T1 zum Abrechnungsserver D1 gelangen oder ob der Abrechnungsserver D1 diese Daten direkt vom Elektrofahrzeug E1 über eine Funkverbindung F3 erhält.

Als Verteilnetzbetreiber V1 wird ein Energieversorgungsunternehmen verstanden, dessen Geschäftszweck im Aufbau und Betrieb des Strom-Verteilnetzes besteht. In diesem Verteilnetz befindet sich die Stromtankstelle T1 an einem definierten Ort. Der Verteilnetzbetreiber V1 hat mit dem Stromlieferanten L1 eine vertragliche Beziehung, die es dem Stromlieferanten L1 erlaubt, flexibel innerhalb des Gebietes des Verteilnetzbetreibers beliebige Stromtankstellen T1 - Tn dazu zu nutzen, den Besitzer des Elektrofahrzeuges E1 mit elektrischer Energie zu beliefern. Beim Strombezug fällt ein Nutzungsentgelt an, welches der Kunde auf Basis des Stromzählers Z2 über den Stromlieferanten L1 an den Verteilnetzbetreiber V1 bezahlt. Als Übertragungsnetzbetreiber Ü1 wird ein Energieversorgungsunternehmen verstanden, dessen Geschäftszweck in dem Aufbau und Betrieb des Übertragungsnetzes besteht.

Als zweckmäßige Weiterentwicklung des Systems ist eine Kombination mit einer Vorrichtung zur Ortung O1 möglich. Die Ortung kann dazu satellitengestützt, beispielsweise über GPS, Galileo usw., mobilfunkgestützt über die Lokalisierung innerhalb der GSM-Funkzelle oder aber auch als Car-to-car-Kommunikation erfolgen, bei welcher verschiedenste Elektrofahrzeuge E1 sich über Zustandsdaten des Fahrzeugs oder über Informationen, beispielsweise bezüglich der nächsten Stromtankstelle T1 bis Tn, austauschen. Auf Basis dieser Daten ist eine Erweiterung möglich, um den bisherigen Energieverbrauch und den Ladezustand der Batterie mit der geplanten Fahrtroute zu einer rechnerischen Reichweite zu kombinieren und daraus die optimale Stromtankstelle T1 bis Tn in Abhängigkeit vom aktuellen Strombezugspreis und der jeweiligen Netzauslastung zu ermitteln.

### Bezugszeichenliste:

- E1: Mobile Verbrauchseinheit / Elektrofahrzeug
- H: Kühl- und/oder Heizeinrichtung
- T1: Ortsfeste Stromtankstelle
- O1: Vorrichtung zur Ortung
- D1: Datenmanagementsystem (Abrechnungsserver)
- D2: Separate Rechnereinheit (zusätzlicher Abrechnungsserver)
- L1: Stromlieferant
- Ü1: Übertragungsnetzbetreiber
- V1: Verteilnetzbetreiber
- Z1: Messeinrichtung
- Z2: Stromzähler
- ID1: Kennnummer
- ID2: Zählernummer
- F1 - F5: Funkverbindungen
- K1 - K4: Kommunikationsverbindungen
- E10: Mobiler Stromzähler
- T10: Steuervorrichtung für Stromtankstelle
- T10a: Anschlussbereich der Steuervorrichtung
- T10b: Steuerbereich der Steuervorrichtung
- 30: Zentrales Steuergerät
- 31: Aktor
- 32: Schalter
- 33: Kommunikationsmodul
- 36: Verschlüsselungsmodul
- 37: Mittel zur Signierung
- 39: Display
- 40: Eingabegerät
- 41: Eigenverbraucher

## Patentansprüche

1. Verfahren zum ortsunabhängigen Bezug elektrischer Energie einer mobilen Verbrauchseinheit (E1) an einer ortsfesten Stromtankstelle (T1), wobei
- die mobile Verbrauchseinheit (E1) mit mindestens einer Kühl- und/oder Heizeinrichtung (H) ausgestattet ist,
- der Verbrauchseinheit (E1) eine eindeutige Kennnummer (ID1) zugeordnet ist,
- die Stromtankstelle (T1) einen Stromzähler (Z2) mit einer Zählernummer (ID2) trägt
und mindestens folgende Verfahrensschritte ausgeführt werden:
- Herstellen einer ersten Kommunikationsverbindung (K1) zwischen der mobilen Verbrauchseinheit (E1) und der Stromtankstelle (T1);
- Übermittlung eines Datenpaketes, enthaltend mindestens die Kennnummer (ID1) und die Zählernummer (ID2), über eine zweite Kommunikationsverbindung (K2) an einen Abrechnungsserver (D1);
- Zuordnung der Verbrauchseinheit (E1) mit Hilfe der Kennnummer (ID1) zu einem Stromlieferanten (L1) und Zuordnung des Stromzählers (Z2) mit Hilfe der Zählernummer (ID2) zu einem Verteilnetzbetreiber (V1) mit Hilfe der auf dem Abrechnungsserver (D1) dazu hinterlegten Daten;
- Freischalten der Stromtankstelle (T1), nach erfolgreicher Zuordnung am Abrechnungsserver (D1);
- Abgabe von elektrischer Energie von der Stromtankstelle (T1) an die Kühl- und/oder Heizeinrichtung (H) der Verbrauchseinheit (E1) über ein Ladekabel oder über eine berührungsfreie Übertragung elektrischer Energie, wobei die mindestens eine Kühl- und/oder Heizeinrichtung (H) ohne Zwischenschaltung eines Akkumulators direkt mit elektrischer Energie der Stromtankstelle (T1) betrieben wird; und
- Übermittlung der von der Verbrauchseinheit (E1) an der Stromtankstelle (T1) entnommenen Menge an elektrischer Energie über die Kommunikationsverbindung (K2) an den Abrechnungsserver (D1),
- wobei eine separate Rechnereinheit (D2) über eine Kommunikationsverbindung K3 mit der Stromtankstelle (T1) verbunden ist und die Abgabe von elektrischer Energie von der Stromtankstelle (T1) an die Kühl- und/oder Heizeinrichtung (H) gemäß Regelgrößen, welche auf der separaten Rechnereinheit (D2) hinterlegt sind, erfolgt; und
- wobei die technischen Regelgrößen der Kühl- und/oder Heizeinrichtung (H) in einem geeigneten Speicher der Verbrauchseinheit (E1) abgelegt werden oder über die Kommunikationsverbindungen K1 und K3 übertragen werden.

2. Verfahren nach Anspruch 1, **dadurch gekennzeichnet, dass** die Kommunikationsverbindung K3 als Funkverbindung F4 ausgebildet ist.

3. Verfahren nach Anspruch 1 oder 2, **dadurch gekennzeichnet, dass** die mobile Verbrauchseinheit (E1)
- mit einen Stromzähler (Z1) zur Erfassung der von der Stromtankstelle (T1) entgegengenommenen Menge an elektrischer Energie ausgestattet ist; und/oder
- ein Fahrzeug mit mindestens einem elektrischen Antrieb und einer Fahrgastzelle ist.

4. Verfahren nach Anspruch 1 oder 2, **dadurch gekennzeichnet, dass**
- die Steuerung oder Regelung der Kühl- und/oder Heizeinrichtung (H) über die Kommunikationsverbindung K1 mit Hilfe der Stromtankstelle (T1) ausgeführt wird; und/oder
- der Kühl- und Heizeinrichtung jeweils eine eigene Kennnummer (IDx) zugeordnet ist; und/oder
- unabhängig von der Außentemperatur die Ansteuerung der Kühleinrichtung oder der Heizeinrichtung so geregelt wird, dass eine gewünschte Solltemperatur, insbesondere einer Fahrgastzelle der Verbrauchseinheit (E1), erreicht wird; und/oder
- mindestens eine Regelgröße der Kühl- und/oder der Heizeinrichtung (H) von einem Benutzer über das Internet, ein PDA, ein Mobiltelefon, oder ein Smartphone in eine Eingabemaske, welche auf der Rechnereinheit D2 hinterlegt ist, eingegeben wird und die genannte(n) Regelgröße(n) dann an die Stromtankstelle (T1) weitergeleitet wird; und/oder
- die Ist-Temperatur der Fahrgastzelle abgefragt werden kann, wobei dazu insbesondere mindestens eine der Kommunikationsleitungen K1 und K3 genutzt werden.

5. Verfahren nach Anspruch 1 oder 2, **dadurch gekennzeichnet, dass** die Kühlvorrichtung eine Klimaanlage und die Heizeinrichtung eine elektrische Standheizung ist.

6. Verfahren nach Anspruch 1 oder 2, **dadurch gekennzeichnet, dass** bei der räumlichen Annäherung der mobilen Verbrauchseinheit (E1) an eine ortsfeste Stromtankstelle (T1) ein automatischer Verbindungsaufbau der ersten Kommunikationsverbindung (K1) zwischen diesen beiden erfolgt.

7. Verfahren nach Anspruch 1 oder 2, **dadurch gekennzeichnet, dass**
- die erste Kommunikationsverbindung (K1) kabelgebundenüber das Ladekabel oder über ein separates Datenkabel oder alternativ über Funk (F1), insbesondere WLAN, Zigbee, Bluetooth, Transpondertechnologie oder RFID, erfolgt; und/oder
- die zweite Kommunikationsverbindung (K2) zwischen der Stromtankstelle (T1) und dem Abrechnungsserver (D1) kabelgebunden über DSL, ISDN, Festnetztelefon oder Powerline oder alternativ über Funk (F2) erfolgt und/oder direkt zwischen der Verbrauchseinheit (E1) und dem Abrechnungsserver (D1) über Funk (F3) erfolgt; und/oder
- die zweite Kommunikationsverbindung (K2) über Funk (F2, F3) über GSM, GPRS, UMTS, WiMAX, Funkrundsteuerung oder Paging erfolgt.

8. Verfahren nach Anspruch 1 oder 2, **dadurch gekennzeichnet, dass** mit Hilfe eines an der Verbrauchseinheit (E1) angebrachten Ortungssystems Daten über den Aufenthaltsort über Funk an eine Stromtankstelle (T1) oder direkt zum Abrechnungsserver (D1) übertragen werden.

9. Steuervorrichtung (T10) in einer Stromtankstelle (T1) zur Durchführung eines Verfahrens nach einem der Ansprüche 1 bis 8, **dadurch gekennzeichnet, dass** die Steuervorrichtung mindestens zwei räumlich voneinander getrennte Bereiche (T10a, T10b) aufweist,
- wobei in einem Anschlussbereich (T10a) mindestens ein Aktor (31) zur Betätigung eines Schalters (32), um den Ladevorgang und/oder den Einspeisevorgang zu starten und zu stoppen, und
- wobei in einem Steuerbereich (T10b) mindestens
- ein zentrales Steuergerät (30),
- ein Kommunikationsmodul (33) zur Aufbereitung von Daten aus dem Steuergerät (30) für die Kommunikation mit der mobilen Speicher- und Verbrauchseinheit (E1) und/oder mit einem Datenmanagementsystem (D1), sowie zur Umwandlung von eintreffenden Signalen in für das Steuergerät (30) verarbeitbare Daten,
- eine Messeinrichtung (Z2) zur Messung der durchfließenden elektrischen Energie bei der Aufladung der mobilen Speicher- und Verbrauchseinheit (E1) oder beim Einspeisen in die Stromtankstelle (T1),
- ein Verschlüsselungsmodul (36) zur Verschlüsselung der vom Steuergerät (30) erzeugten Daten und
- ein mit der Messeinrichtung (Z2) verbundenes Mittel (37) zur Signierung der von der Messeinrichtung (Z2) ermittelten Daten mit einer Zählernummer (ID2) vorhanden sind
und das Kommunikationsmodul (33) eine Kommunikationsverbindung (K3) zu einer separaten Rechnereinheit (D2) aufweist und die Steuervorrichtung eingerichtet ist, die Abgabe von elektrischer Energie gemäß Regelgrößen, welche auf der separaten Rechnereinheit (D2) hinterlegt sind freizuschalten.

10. Steuervorrichtung (T10) in einer Stromtankstelle (T1) nach Anspruch 9, **dadurch gekennzeichnet,**
- **dass** der Anschlussbereich der Steuervorrichtung (T10a) mit dem Aktor (31) und dem Schalter (32) in einer Straßenlaterne, oder einem elektrisch angesteuerten Werbeplakat oder einer Transformatorenstation untergebracht ist, und/oder
- **dass** Anschlussbereich (T10a) und Steuerbereich (T10b) der Steuervorrichtung über eine Kommunikationsverbindung (K4) verbunden sind.

11. Steuervorrichtung in einer Stromtankstelle (T1) nach Anspruch 10, **dadurch gekennezeichnet**, dass die Kommunikationsverbindung (K4) kabellos angelegt ist (F5).

## Claims

1. Method for the location-independent purchase of electrical energy from a mobile consumption unit (E1) at a stationary electricity filling station (T1), where
- the mobile consumption unit (E1) is equipped with at least one cooling and/or heating device (H),
- a unique ID number (ID1) is assigned to the consumption unit (E1),
- the electricity filling station (T1) carries an electricity meter (Z2) with a meter number (ID2)
and at least the following process steps are executed:
- establishing a first communication link (K1) between the mobile consumption unit (E1) and the electricity filling station (T1);
- Transmission of a data packet containing at least the identification number (ID1) and the meter number (ID2) via a second communication link (K2) to a billing server (D1);
- Assignment of the consumption unit (E1) using the identification number (ID1) to an electricity supplier (L1) and assignment of the electricity meter (Z2) using the meter number (ID2) to a distribution network operator (V1) using the data stored on the billing server (D1) for this purpose;
- Activation of the electricity filling station (T1) after successful assignment on the billing server (D1);
- delivery of electrical energy from the electric charging station (T1) to the cooling and/or heating device (H) of the consumption unit (E1) via a charging cable or via a contact-free transmission of electrical energy, the at least one cooling and/or heating device (H) being operated with electrical energy from the electric charging station (T1) without an accumulator being connected in between; and
- Transmission of the quantity of electrical energy taken from the consumption unit (E1) at the electricity filling station (T1) via the communication link (K2) to the billing server (D1),
- wherein a separate computer unit (D2) is connected via a communication link K3 to the electric charging station (T1) and the electrical energy is delivered from the electric charging station (T1) to the cooling and/or heating device (H) in accordance with controlled variables which are stored on the separate computer unit (D2); and
- the technical control variables of the cooling and/or heating device (H) being stored in a suitable memory of the consumption unit (E1) or being transmitted via the communication connections K1 and K3.

2. Method according to claim 1, **characterized in that** the communication connection K3 is designed as a radio connection F4.

3. Method according to claim 1 or 2, **characterized in that** the mobile consumption unit (E1)
- is equipped with an electricity meter (Z1) for detecting the amount of electrical energy received by the electricity filling station (T1); and/or
- is a vehicle with at least one electric drive and one passenger compartment.

4. Process according to claim 1 or 2, **characterized in that**
- the control or regulation of the cooling and/or heating device (H) is carried out via the communication link K1 with the aid of the current filling station (T1); and/or
- the cooling and heating equipment is each assigned its own identification number (IDx); and/or
- the activation of the cooling device or of the heating device is controlled independently of the outside temperature in such a way that a desired desired temperature, in particular of a passenger cell of the consumption unit (E1), is reached; and/or
- at least one controlled variable of the cooling and/or heating device (H) is input by a user via the Internet, a PDA, a mobile telephone or a smartphone into an input mask which is stored on the computer unit D2, and the said controlled variable(s) is then forwarded to the charging station (T1); and/or
- the actual temperature of the passenger compartment can be queried, whereby at least one of the communication lines K1 and K3 is used for this purpose.

5. Method according to claim 1 or 2, **characterized in that** the cooling device is an air conditioning system and the heating device is an electric parking heater.

6. Method according to claim 1 or 2, **characterized in that**, when the mobile consumption unit (E1) approaches a stationary electricity filling station (T1) spatially, the first communication link (K1) is automatically established between these two.

7. Method according to claim 1 or 2, **characterized in that**
- the first communication connection (K1) is wired via the charging cable or via a separate data cable or alternatively via radio (F1), in particular WLAN, Zigbee, Bluetooth, transponder technology or RFID; and/or
- the second communication connection (K2) between the electricity filling station (T1) and the billing server (D1) is made by cable via DSL, ISDN, landline telephone or powerline, or via radio (F2), and/or is made directly between the consumption unit (E1) and the billing server (D1) via radio (F3); and/or
- the second communication link (K2) is established via radio (F2, F3), preferably GSM, GPRS, UMTS, WiMAX, radio ripple control or paging.

8. Method according to claim 1 or 2, **characterised in that** with the aid of a locating system attached to the consumption unit (E1), data on the location are transmitted by radio to an electricity filling station (T1) or directly to the billing server (D1).

9. Control device (T10) in a current filling station (T1) for carrying out a method according to one of claims 1 to 8, **characterized in that** the control device has at least two spatially separated regions (T10a, T10b),
- at least one actuator (31) in a connection region (T10a) for actuating a switch (32) in order to start and stop the charging process and/or the feeding process, and
- wherein in a control region (T10b) at least
- a central control unit (30),
- a communication module (33) for preparing data from the control unit (30) for communication with the mobile storage and consumption unit (E1) and/or with a data management system (D1), and for converting incoming signals into data which can be processed by the control unit (30),
- a measuring device (Z2) for measuring the electrical energy flowing through during charging of the mobile storage and consumption unit (E1) or during feeding into the electricity filling station (T1),
- an encryption module (36) for encrypting the data generated by the control unit (30), and
- there are means (37) connected to the measuring device (Z2) for signing the data determined by the measuring device (Z2) with a counter number (ID2), and
- the communication module (33) has a communication connection (K3) to a separate computer unit (D2) and the control device is set up to enable the output of electrical energy in accordance with control variables which are stored on the separate computer unit (D2).

10. Control device (T10) in a current filling station (T1) according to claim 9, **characterized in that**
- **in that** the connection region of the control device (T10a) with the actuator (31) and the switch (32) is accommodated in a street lamp, or an electrically driven advertising poster or a transformer station, and/or
- **in that** the connection region (T1Oa) and the control region (T10b) of the control device are connected via a communication link (K4).

11. Control device in a power supply station (T1) according to Claim 10, **characterized in that** the communication device (K4) is applied wirelessly (F5)

## Revendications

1. Méthode d'achat d'énergie électrique d'une unité de consommation mobile (E1) à une station de remplissage électrique stationnaire (T1), indépendamment de l'endroit où elle se trouve, où
- l'unité mobile de consommation (E1) est équipée d'au moins un dispositif de refroidissement et/ou de chauffage (H),
- un numéro d'identification unique (ID1) est attribué à l'unité de consommation (E1),
- la station de remplissage électrique (T1) porte un compteur électrique (Z2) avec un numéro de compteur (ID2)
et au moins les étapes suivantes sont exécutées :
- établir une première liaison de communication (K1) entre l'unité mobile de consommation (E1) et la station de remplissage électrique (T1),
- Transmission d'un paquet de données contenant au moins le numéro d'identification (ID1) et le numéro de compteur (ID2) via une deuxième liaison de communication (K2) vers un serveur de facturation (D1) ;
- attribution de l'unité de consommation (E1) à un fournisseur d'électricité (L1) à l'aide du numéro d'identification (ID1) et attribution du compteur d'électricité (Z2) à un gestionnaire de réseau de distribution (V1) à l'aide des données enregistrées à cet effet sur le serveur de facturation (D1) ;
- Activation de la station de remplissage électrique (T1) après une affectation réussie sur le serveur de facturation (D1) ;
- la fourniture d'énergie électrique de la station de charge électrique (T1) au dispositif de refroidissement et/ou de chauffage (H) de l'unité de consommation (E1) via un câble de charge ou via une transmission d'énergie électrique sans contact, le au moins un dispositif de refroidissement et/ou de chauffage (H) fonctionnant avec l'énergie électrique de la station de charge électrique (T1) sans raccordement d'un accumulateur ; et
- Transmission de la quantité d'énergie électrique prélevée de l'unité de consommation (E1) à la station de remplissage électrique (T1) via la liaison de communication (K2) vers le serveur de facturation (D1),
- dans laquelle une unité d'ordinateur séparée (D2) est connectée via une liaison de communication K3 à la station de charge électrique (T1) et l'énergie électrique est fournie par la station de charge électrique (T1) au dispositif de refroidissement et/ou de chauffage (H) en fonction de variables commandées qui sont stockées sur l'unité d'ordinateur séparée (D2) ; et
- les grandeurs de commande techniques du dispositif de refroidissement et/ou de chauffage (H) étant mémorisées dans une mémoire appropriée de l'unité de consommation (E1) ou étant transmises par les connexions de communication K1 et K3.

2. Procédé selon la revendication 1, **caractérisé en ce que** la liaison de communication K3 est conçue comme une liaison radio F4.

3. Procédé selon la revendication 1 ou 2, **caractérisé en ce que** l'unité de consommation mobile (E1)
- est équipé d'un compteur électrique (Z1) pour détecter la quantité d'énergie électrique reçue par la station de remplissage électrique (T1) ; et/ou
- est un véhicule avec au moins une propulsion électrique et un habitacle.

4. Procédé selon la revendication 1 ou 2, **caractérisé en ce que**
- la commande ou la régulation du dispositif de refroidissement et/ou de chauffage (H) s'effectue via la liaison de communication K1 à l'aide de la station de remplissage actuelle (T1) ; et/ou
- l'équipement de refroidissement et de chauffage se voit attribuer son propre numéro d'identification (IDx) ; et/ou
- l'activation du dispositif de refroidissement ou du dispositif de chauffage est commandée indépendamment de la température extérieure de telle sorte qu'une température souhaitée, en particulier d'une cellule passagers de l'unité de consommation (E1), soit atteinte ; et/ou
- au moins une grandeur commandée du dispositif de refroidissement et/ou de chauffage (H) est introduite par un utilisateur via Internet, un PDA, un téléphone mobile ou un smartphone dans un masque d'entrée qui est mémorisé sur l'unité informatique D2, et ladite grandeur commandée est ensuite transmise à la station de charge (T1) ; et/ou
- la température réelle de l'habitacle peut être interrogée, au moins l'une des lignes de communication K1 et K3 étant utilisée à cet effet.

5. Procédé selon la revendication 1 ou 2, **caractérisé en ce que** le dispositif de refroidissement est un système de climatisation et le dispositif de chauffage est un chauffage électrique de stationnement.

6. Procédé selon la revendication 1 ou 2, **caractérisé en ce que**, lorsque l'unité mobile de consommation (E1) s'approche dans l'espace d'une station de remplissage électrique stationnaire (T1), la première liaison de communication (K1) est automatiquement établie entre ces deux stations.

7. Procédé selon la revendication 1 ou 2, **caractérisé en ce que**
- la première connexion de communication (K1) est câblée par le câble de charge ou par un câble de données séparé ou encore par radio (F1), en particulier WLAN, Zigbee, Bluetooth, technologie transpondeur ou RFID ; et/ou
- la deuxième liaison de communication (K2) entre la station de remplissage électrique (T1) et le serveur de facturation (D1) est établie par câble via DSL, RNIS, téléphone fixe ou ligne à haute tension, ou via radio (F2), et/ou est établie directement par radio (F3) entre l'unité de consommation (E1) et le serveur de facturation (D1) ; et/ou
- la deuxième liaison de communication (K2) est établie par radio (F2, F3), de préférence GSM, GPRS, UMTS, UMTS, WiMAX, télécommande radio ou paging.

8. Procédé selon la revendication 1 ou 2, **caractérisé en ce qu'**à l'aide d'un système de localisation relié à l'unité de consommation (E1), les données de localisation sont transmises par radio à une station de remplissage électrique (T1) ou directement au serveur de facturation (D1).

9. Dispositif de commande (T10) dans une station de remplissage de courant (T1) pour réaliser un procédé selon l'une des revendications 1 à 8, **caractérisé en ce que** le dispositif de commande comporte au moins deux zones séparées dans l'espace (T10a, T10b),
- au moins un actionneur (31) dans une zone de raccordement (T10a) pour actionner un interrupteur (32) pour démarrer et arrêter le processus de charge et/ou le processus d'alimentation, et
- dans laquelle, dans une région de contrôle (T10b), au moins
- une unité de commande centrale (30),
- un module de communication (33) pour préparer des données provenant de l'unité de commande (30) pour la communication avec l'unité mobile de stockage et de consommation (E1) et/ou avec un système de gestion de données (D1), et pour convertir les signaux entrants en données qui peuvent être traitées par l'unité de commande (30),
- un dispositif de mesure (Z2) pour mesurer l'énergie électrique circulant pendant la charge de l'unité mobile de stockage et de consommation (E1) ou pendant l'alimentation de la station de remplissage électrique (T1),
- un module de chiffrement (36) pour chiffrer les données générées par l'unité de commande (30), et
- des moyens (37) sont reliés au dispositif de mesure (Z2) pour signer les données déterminées par le dispositif de mesure (Z2) avec un numéro de compteur (ID2), et
- le module de communication (33) présente une connexion de communication (K3) avec une unité informatique séparée (D2) et le dispositif de commande est configuré pour permettre la sortie d'énergie électrique en fonction de grandeurs de commande qui sont stockées sur l'unité informatique séparée (D2).

10. Dispositif de commande (T10) dans une station de remplissage de courant (T1) selon la revendication 9, **caractérisé en ce que**
- **en ce que** la zone de raccordement de l'appareil de commande (T10a) avec l'actionneur (31) et l'interrupteur (32) est logée dans un lampadaire, une affiche publicitaire à commande électrique ou un poste de transformation, et/ou
- **en ce que** la zone de connexion (T1Oa) et la zone de commande (T1Ob) de l'appareil de commande sont reliées par une liaison de communication (K4).

11. Dispositif de commande dans une station d'alimentation (T1) selon la revendication 10, **caractérisé en ce que** le dispositif de communication (K4) est appliqué sans fil (F5)
